# EUROPÄISCHE PATENTANMELDUNG

(11) **EP 1 980 758 A2**
(43) Veröffentlichungstag der Anmeldung: **15.10.2008**
(21) Anmeldenummer: 08102713.8
(22) Anmeldetag: 18.03.2008
(51) Int. Cl.: F16B 19/00

(54) **Verbindungselement zum Verbinden von zwei Werkstücken**

(30) Priorität: 13.04.2007 CH 6152007
(71) Anmelder: Lamello AG, 4416 Bubendorf (CH)
(72) Erfinder: Haenni, Samuel, 4852 Rothrist (CH); Jeker, Patrick, 4225 Brislach (CH)
(74) Vertreter: Kemény AG Patentanwaltbüro

(57) **Zusammenfassung**

Ein Verbindungselement(21) zum Verbinden von zwei Werkstücken (1, 3), welche je endständig eine Nut (11, 13) aufweisen und welche Nuten zum Verbinden in den Kontaktflächen aufeinander ausgerichtet sind, ist lamellenartig ausgebildet und derart dimensioniert, um in die Nuten eingetrieben bzw. eingeschlagen zu werden. Das lamellenartige Element weist auf den Seitenflächen rippenartige, weitgehendst in Eintreibrichtung verlaufende Erhebungen (23, 25) auf, welche in Eintreibrichtung und von der Verbindung der beiden Werkstücke aus gesehen, mindestens entlang je eines Abschnittes schräg oder kurvenartig auseinanderlaufend ausgebildet sind.

## Beschreibung

Die vorliegende Erfindung betrifft ein Verbindungselement gemäss dem Oberbegriff nach Anspruch 1 sowie ein Verfahren zum Verbinden zweier Werkstücke.

Zum Verbinden von zwei Werkstücken ist eine Vielzahl von Möglichkeiten bekannt. Nebst in den Werkstücken selbst angeordneten Verbindungsmittel besteht auch die Möglichkeit des Verbindens mittels externer Elemente, wie Haken, vorstehender Bügel, Schnappelemente, Schraubverbindungen, Wellennägel, etc.

Die Aufgabe der vorliegenden Erfindung besteht im Schaffen eines Verbindungselementes, welches auf einfache Art und Weise eine stabile und zuverlässige Verbindung zweier Werkstücke ermöglicht. Nebst der Einfachheit des Gebrauches bzw. der Anwendung soll auch das Element selbst einfach und kostengünstig in seiner Herstellung sein.

Erfindungsgemäss wird ein Verbindungselement gemäss dem Wortlaut nach Anspruch 1 vorgeschlagen.

Das erfindungsgemässe Verbindungselement zum Verbinden zweier Werkstücke ist lamellenartig bzw. plättchenartig ausgebildet mit auf mindestens einer Seitenfläche mindestens zwei rippenartigen, längsausgebildeten Erhebungen, welche mindestens entlang je eines Abschnittes schräg, winklig und/oder gebogen voneinander verlaufend ausgebildet sind.

In den beiden zu verbindenden Werkstücken ist je endständig, bzw. in Richtung zur Verbindung, d.h. der Kontaktfläche, und aufeinander ausgerichtet je eine Nut ausgebildet, und das lamellenartige bzw. plättchenartige Element ist vorgesehen, um zum Verbinden in die Nuten eingetrieben bzw. eingeschlagen zu werden, wobei die mindestens zwei rippenartigen Erhebungen weitgehendst in Eintreibrichtung verlaufend ausgebildet sind.

Gemäss einer Ausführungsvariante sind auf beiden Seitenflächen des lamellenartigen Elementes rippenartige Erhebungen vorgesehen, wobei die rippenartigen Erhebungen von der Verbindung der beiden Werkstücke gesehen, in Eintreibrichtung voneinander bzw. auseinander verlaufend ausgebildet sind. Dabei versteht es sich von selbst, dass immer mindestens je eine dieser rippenartigen Erhebungen in einer der beiden Nuten der beiden Werkstücke verlaufend am lamellenartigen Element ausgebildet ist.

Gemäss einer Ausführungsvariante sind die rippenartigen Erhebungen, in Eintreibrichtung gesehen, im unteren Bereich des lamellenartigen Elementes auseinanderlaufend ausgebildet.

Die rippenartigen Erhebungen können sowohl gleichmässig stark je von der Seitenfläche vorstehend ausgebildet sein oder aber in der Längsrichtung gesehen, wenigstes teilweise an gewissen Stellen unterbrochen. Auch können die rippenartigen Erhebungen quasi keilförmig oder konisch verlaufend in Eintreibrichtung ausgebildet sein, d.h. dass deren Höhe in Eintreibrichtung gegen die Unterkante des Verbindungselementes abnehmend ausgebildet ist.

Wiederum gemäss einer Ausführungsvariante können die rippenartigen Erhebungen gezackt unterbrochen ausgebildet sein, mit vorzugsweise entgegen der Eintreibrichtung gerichteten Zacken um ein Ausbrechen des Elementes aus der Nut zu verhindern. Die rippenartigen Erhebungen sind selbstschneidend.

Vorzugsweise direkt neben den rippenartigen Erhebungen können auch rillenartige Vertiefungen entlang der Rippen ausgebildet sein, geeignet, um beim Eintreiben das durch die Rippen in den Nutenwandungen verdrängte Material aufzunehmen.

Schliesslich können auf den Seitenflächen des lamellenartigen Elementes weitere hakenartige Elemente vorgesehen sein.

Die Grundform des lamellenartigen bzw. plättchenartigen Verbindungselementes ist an sich frei und so kann dieses beispielsweise rechteckig, kreissegmentförmig, dreieckförmig usw. ausgebildet sein, und insbesondere in Eintreibrichtung gesehen, kann die Unterkante des Elementes bogenförmig, oval, elliptisch, winklig, weitgehendst gerade etc. ausgebildet sein.

Das Verbindungselement kann dabei aus den verschiedensten Materialien hergestellt sein, wie aus Kunststoff, Metall, Holzwerkstoffen, Holzcomposits oder Kombinationen dieser Materialien. Auf verschiedene mögliche beispielsweise Formen der Verbindungselemente wie auch der rippenartigen Erhebungen wird nachfolgend unter Bezug auf die beigefügten Figuren weiter eingegangen.

Weiter vorgeschlagen wird ein Verfahren zum Verbinden zweier Werkstücke, wobei in den beiden zu verbindenden Werkstücken je endständig in Verbindungsrichtung, d.h. in Richtung Kontaktfläche und zueinander ausgerichtet je eine Nut auszubilden ist. Zum Verbinden wird nun ein lamellenartiges bzw. plättchenartiges Element in die beiden aufeinander ausgerichteten Nuten eingetrieben bzw. eingeschlagen, wobei durch das spezielle Ausbilden der rippenartigen Erhebungen die beiden zu verbindenden Werkstücke quer zur Eintreibrichtung in der Kontaktfläche zusammengepresst werden. Es versteht sich von selbst, dass die Tiefe der Nuten mindestens der Eintreibtiefe des lamellenartigen Elementes zu entsprechen hat.

Weitere bevorzugte Ausführungsvarianten, sowohl des Verbindungselementes wie auch des Verfahrens sind in abhängigen Ansprüchen charakterisiert.

Die Erfindung wird nun beispielsweise und unter Bezug auf die beigefügten Figuren näher erläutert.

Dabei zeigen:
- Fig. 1: schematisch in Perspektive das Verbinden zweier Werkstücke mittels eines längsausgedehnten, weitgehendst rechteckig ausgebildeten, eine abgerundete Unterkante aufweisenden Verbindungselementes,
- Fig. 2: wiederum schematisch in Perspektive das Verbinden zweier Werkstücke mittels eines andersartig ausgebildeten Verbindungselementes,
- Fig. 3: das Verbinden zweier Werkstücke in einem Eckbereich mittels eines winklig ausgebildeten Verbindungselementes,
- Fig. 4: in Seitenansicht, in Draufsicht, im Längsschnitt sowie in Seitenperspektive ein erfindungsgemässes Verbindungselement,
- Fig. 5: in Seiten- sowie Draufsicht, im Querschnitt sowie in Seitenperspektive eine weitere Ausführungsvariante eines Verbindungselementes,
- Fig. 6: wiederum eine weitere Ausführungsvariante eines Verbindungselementes im Längsschnitt, analog der Darstellung aus Fig. 4c,
- Fig. 7a -: d Beispiele weiterer Ausführungsvarianten eines Verbindungselementes in Perspektive,
- Fig. 8a -: f wiederum Beispiele weiterer Ausführungsvarianten eines Verbindungselementes in Perspektive, und
- Fig. 9a -: c Beispiele von rippenartigen Erhebungen an einem Verbindungselement in Perspektive.

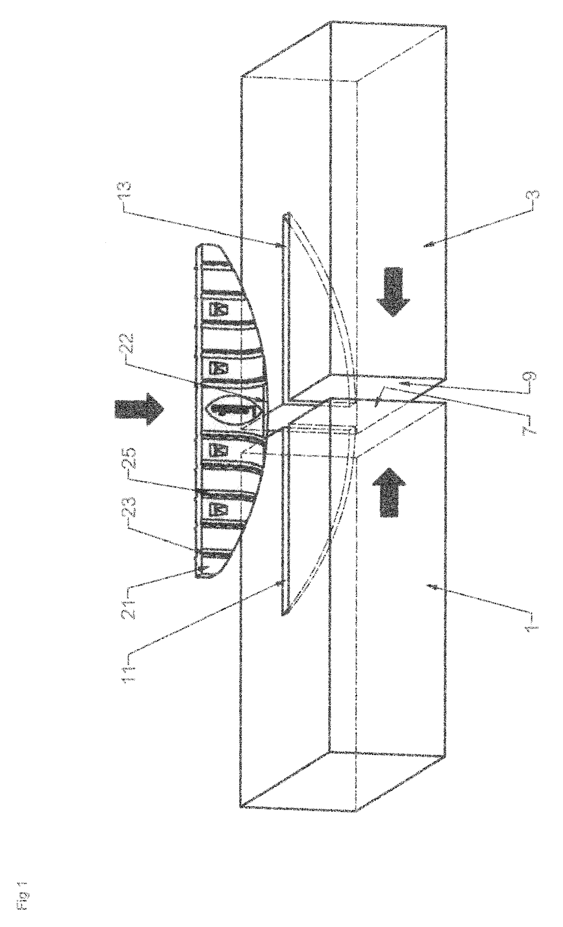

Figur 1 zeigt in seitlicher Perspektive das Verbinden zweier Werkstücke 1 und 3, in welchen je eine Nut 11 bzw. 13 ausgebildet ist. Um die beiden Werkstücke 1 und 3 zu verbinden ist ein längsausgedehntes, lamellenartiges Verbindungselement 21 vorgesehen, welches auf beiden Seiten rippenartige Erhebungen 23 und 25 aufweist. Dabei sind diese rippenartigen Erhebungen von der Mitte aus gesehen auseinanderlaufend ausgebildet, vorzugsweise im, in Eintreibrichtung gesehen endständigen Bereich, d.h. im Bereich der unteren Kante 22 des Elementes.

Das Verbindungselement gemäss Fig. 1 weist dabei eine abgerundete bzw. bogenförmige Unterkante 22 auf. Dies ist keinesfalls zwingend, d.h. die Unterkante kann auch geradlinig, trapezförmig, dreieckförmig etc. ausgebildet sein.

Um nun die beiden Werkstücke 1 und 3 mit ihren frontseitigen Flächen 7 und 9 aneinander stossend zu verbinden, wird das Verbindungselement in Pfeilrichtung in die beiden Nuten 11 und 13 eingetrieben, wobei durch diesen Eintreibvorgang die beiden zu verbindenden Werkstücke quer zur Eintreibrichtung zusammengepresst werden. Die Presswirkung erfolgt über die vorstehenden Rippen 23 und 25 am Verbindungselement infolge der speziellen Anordnung der Rippen und dem Kurvenverlauf, der in etwa parallel zur Eintreibrichtung und im unteren Bereich bogenförmig auseinanderlaufend ausgebildet ist. Durch das endständige Auseinanderlaufen der Rippen wird die Presswirkung erzielt. Die Fuge kann dabei mit oder ohne Klebstoff verbunden werden.

Das Spezielle an dieser Verbindung ist, dass die Presswirkung nicht nur an der Oberfläche auftritt, sondern vor allem auch im Innern der Fuge und sich somit auf die ganze Fugentiefe und Kontaktfläche verteilt.

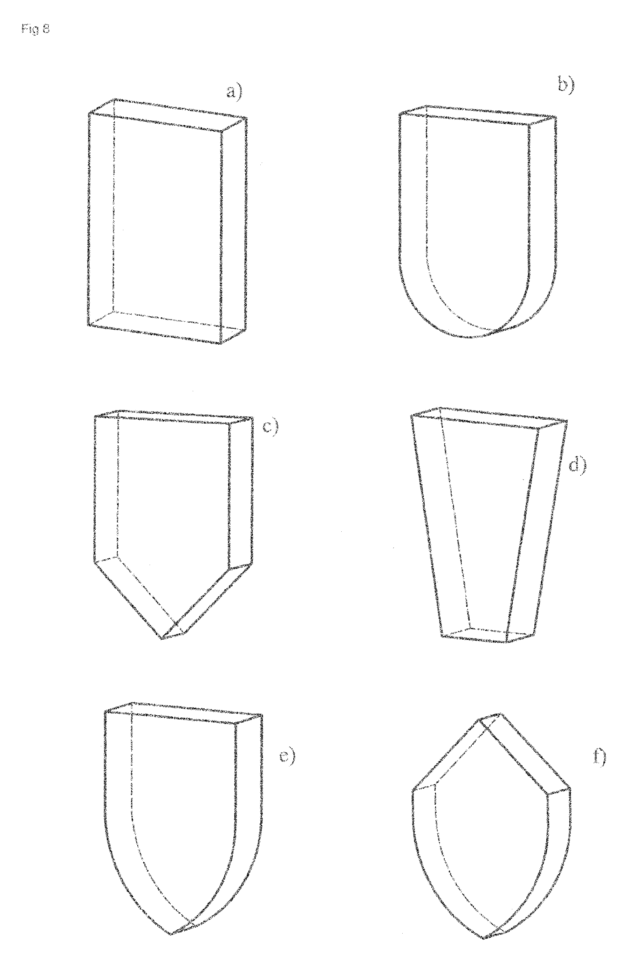

Die Grundform des Verbindungselementes ist dabei völlig frei, und so kann diese bspw. rechteckig, kreissegmentförmig, dreieckförmig usw. ausgebildet sein oder auch andere Formen aufweisen. Dasselbe gilt auch für die in Eintreibrichtung gesehen untere Kante 22 des Verbindungselementes, welche geradlinig, bogenförmig, gezackt, keilförmig usw. ausgebildet sein kann. In der Darstellung gemäss Fig. 1 ist diese Unterkante 22 bogenförmig ausgebildet. Auch in der Dicke ist dieses Element nicht eingeschränkt. Einige Beispiele möglicher Formen sind schematisch in den Figuren 8a - e dargestellt.

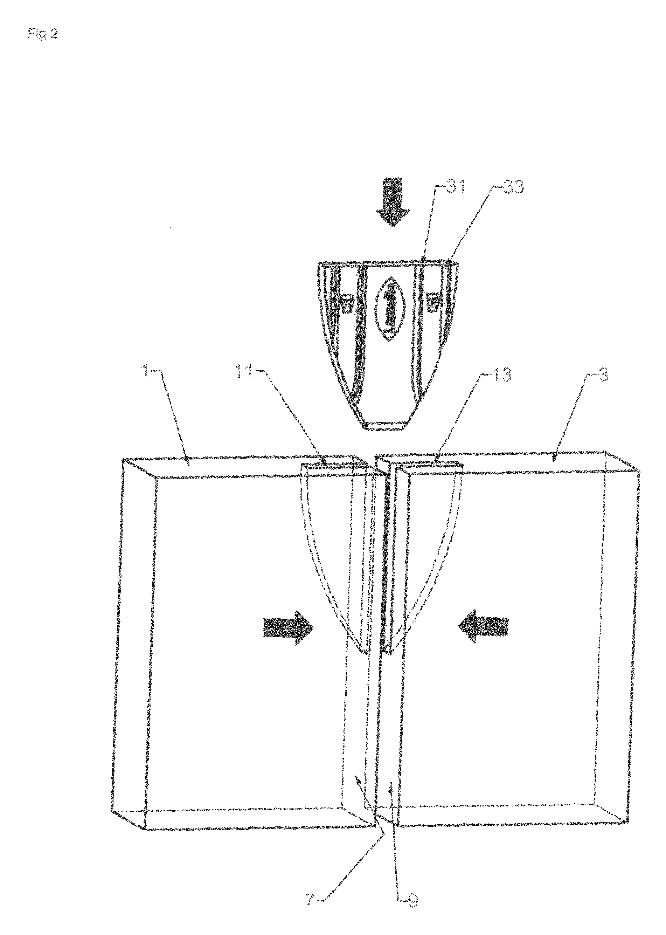

Entsprechend zeigt Figur 2 wiederum in Perspektive das Verbinden zweier Werkstücke 1 und 3 durch Eintreiben eines weiteren, lamellenartigen Verbindungselementes 31 in die beiden aufeinander ausgerichteten Nuten 11 und 13. Wiederum sind im Verbindungselement 31 die parallel zur Eintreibrichtung ausgebildeten, rippenartigen Erhebungen 33 vorgesehen, welche in Eintreibrichtung endständig auseinanderlaufend ausgebildet sind.

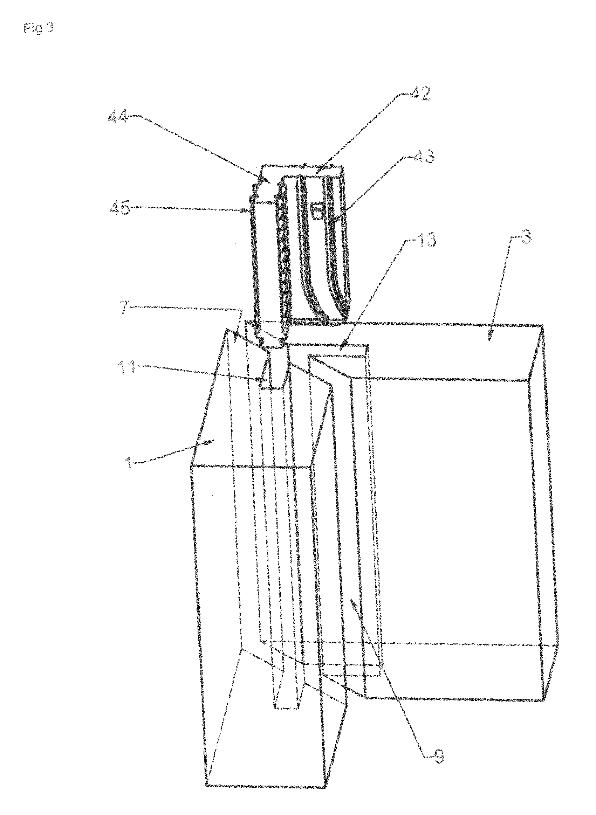

Das Verbindungselement kann aber auch in Draufsicht gesehen winklig ausgebildet sein, wie beispielsweise in Figur 3 schematisch in Perspektive von oben gesehen, wo eine Eckverbindung zweier Werkstücke 1 und 3 dargestellt ist. Wiederum wird ein nun winklig ausgebildetes Verbindungselement 41 in die beiden Nuten 11 und 13 eingetrieben, welche im Eckbereich der beiden zu verbindenden Werkstücke 1 und 3 erneut aufeinander ausgerichtet bzw. aneinander stossend ausgebildet sind. Durch die in den beiden Schenkeln 42 und 44 des Verbindungselementes ausgebildeten rippenartigen Erhebungen 43 und 45 wird wiederum die Presswirkung auf die Kontaktflächen 7 und 9 beim Eintreiben des Elementes in die Nuten 11 und 13 erzeugt.

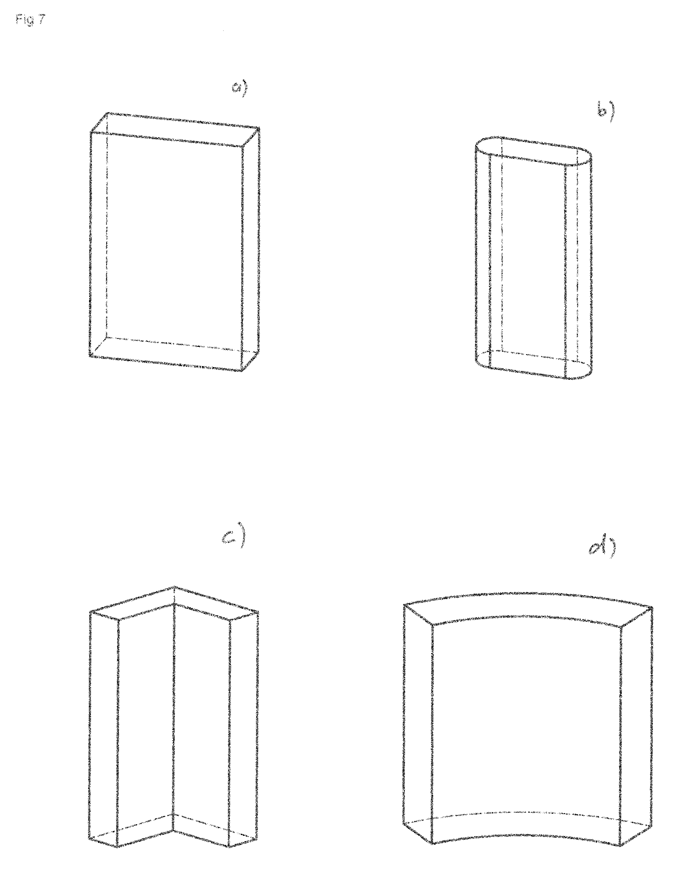

Analog einer Winkelverbindung können selbstverständlich auch zwei in Draufsicht gesehen rund ausgebildete Werkstücke miteinander verbunden werden, indem das Verbindungselement (in Draufsicht gesehen) rohrsegment- bzw. ringsegmentförmig ausgebildet ist. Aber auch eine Verbindung eines winklig ausgebildeten Werkstückes mit einem gerade ausgebildeten Werkteil, eines runden Werkstückes mit einem winklig ausgebildeten Werkstück, etc. kann mittels eines erfindungsgemäss vorgeschlagenen lamellenartigen Verbindungselementes erzeugt werden. Wesentlich dabei ist, dass das lamellenartige Verbindungselement auf die in den jeweiligen Werkstücken erzeugten Nutenformen ausgerichtet ist. Beispiele möglicher Formen sind in den Figuren 7a - d dargestellt.

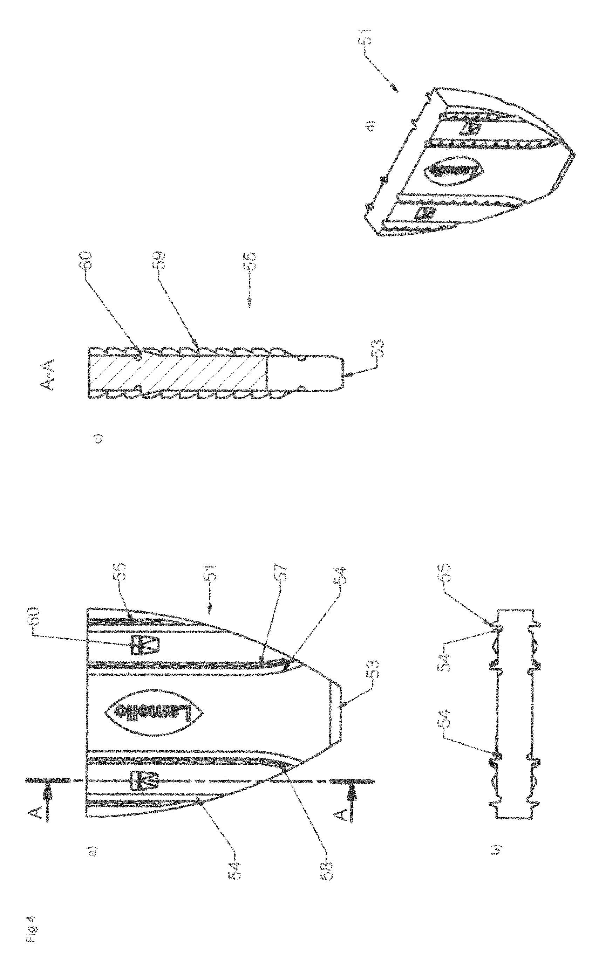

In Figur 4 ist eine mögliche Form eines lamellenartigen Verbindungselementes 51 in vier verschiedenen Ansichten dargestellt. Figur 4a zeigt eine Seitenansicht des lamellenartigen Elementes 51, welches in Eintreibrichtung oval oder elliptisch zusammenlaufend ausgebildet ist mit einer gerade abgeflachten unteren Frontpartie 53. Je links und rechts sind symmetrisch je zwei rippenartige Erhebungen 55 ausgebildet, welche in Eintreibrichtung gesehen weitgehendst parallel zueinander verlaufen. Deutlich erkennbar ist nun, dass in Eintreibrichtung gesehen endständig mindestens zwei rippenartige Erhebungen entlang der Partien 57 und 58 z.B. bogenförmig oder abgewinkelt auseinanderlaufend ausgebildet sind zur Erzeugung der Presswirkung auf die Kontaktflächen der Werkstücke beim Eintreiben des Elementes 51 in die Nuten der Werkstücke.

Weiter vorgesehen in der sichtbaren Seitenfläche sind zusätzliche Hakenelemente 60, welche vorgesehen sind um ein Ausbrechen der Lamelle aus den Nuten zu verhindern.

Figur 4b zeigt die Lamelle aus Figur 4a in Draufsicht in Eintreibrichtung gesehen, und Figur 4c zeigt einen Längsschnitt entlang der Linie A-A aus Figur 4a. Wie insbesondere aus Fig. 4 deutlich erkennbar, sind in den Seitenflächen der Lamelle 51 zusätzlich zu den Rippen 55 rillenartige Vertiefungen 54 vorgesehen, welche direkt benachbart anschliessend an die vorstehenden Rippen 55 verlaufend ausgebildet sind. Der Vorteil dieser rillenartigen Vertiefungen liegt darin, dass das durch die Rippen in den Nutenwandungen beim Eintreiben ausgebrochene Material von den Rillen aufgenommen werden kann. Da das Eintreiben des Elementes durch die vorstehenden Rippen "selbstschneidend" erfolgt, wird aus den seitlichen NutWandungen Material herausgelöst resp. verdrängt. Wie weiter in Figur 4c deutlich erkennbar, sind die rippenartigen Erhebungen 55 in ihrer Längsrichtung zackenartig unterbrochen durch Ausbilden einzelner seitlich vorstehender Haken 59. Die Haken sind dabei rückwärts gegen die Eintreibrichtung vorstehend ausgebildet um ein Ausbrechen des Verbindungselementes aus den Nuten zu verhindern.

Figur 4d schliesslich zeigt das lamellenartige Element in Seitenperspektive.

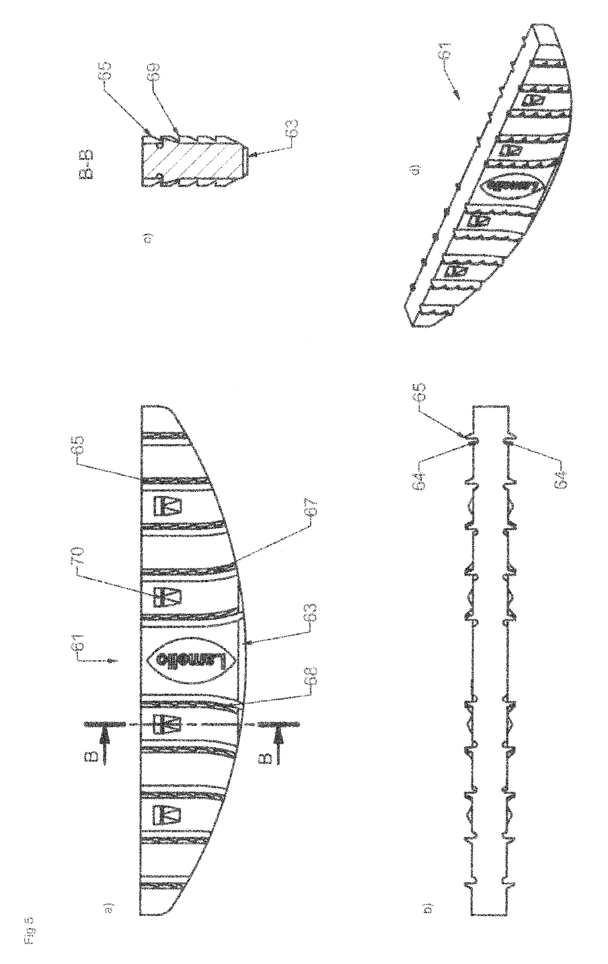

Analog zeigen die Figuren 5a bis 5d eine weitere Ausführungsvariante eines lamellenartigen Verbindungselementes 61, aufweisend parallel zur Eintreibrichtung ausgebildete rippenartige Erhebungen 65, wobei mindestens ein Teil dieser Rippen in Eintreibrichtung endständig auseinanderlaufende Partien 67 und 68 aufweist. Das lamellenartige Element 61 aus Figur 5 weist in Eintreibrichtung gesehen, eine weitgehendst bogenförmige Frontpartie 63 auf. Erneut sind in der Seitenfläche hakenartige Elemente 70 vorgesehen, um ein Ausbrechen des Elementes zu verhindern. Die Figuren 5b bis 5d zeigen analoge Darstellungen zu denjenigen in den Figuren 4b bis 4d.

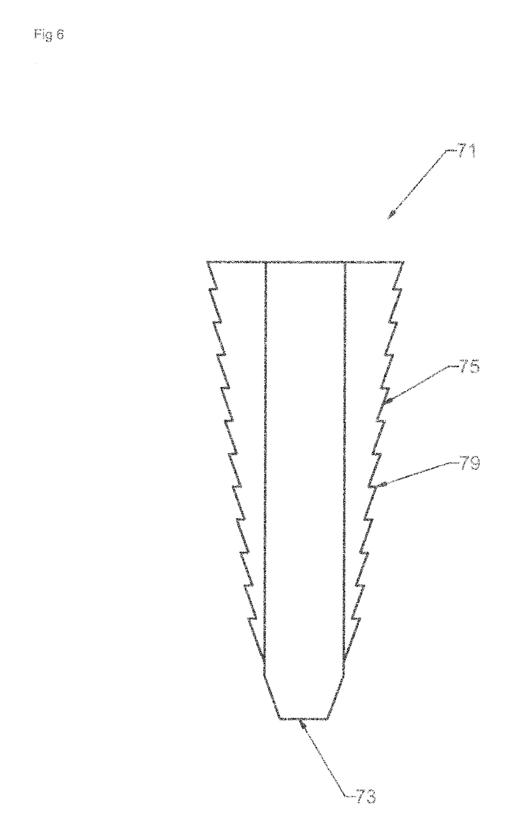

Fig. 6 zeigt analog der Darstellungen in den Figuren 4c und 5c einen Längsschnitt entlang eines erfindungsgemässen Verbindungselementes im Bereich einer rippenartigen Erhebung. Im Gegensatz zu den vorangehend beschriebenen Verbindungselementen weist das Verbindungselement 71 gemäss Fig. 6 seitlich vorstehende rippenartige Erhebungen 75 auf, welche in Eintreibrichtung konisch zusammenlaufend bzw. weitgehend keilförmig zusammenlaufend ausgebildet sind. Mit anderen Worten ist die Höhe der Rippen im Frontbereich bzw. im Bereich der unteren Kante 73 geringer als die Höhe der Rippen im oberen Bereich des Elementes 71. Wiederum sind die Rippen 75 gezackt ausgebildet mit in Eintreibrichtung rückwärts gerichteten Haken 79, um ein Ausbrechen des Elementes aus der Nut zu verhindern.

Wie bereits unter Bezug auf Figur 3 erwähnt, müssen die lamellenartigen bzw. plättchenartigen Verbindungselemente nicht geradflächig längsausgedehnt ausgebildet sein, sondern sie können in ihrer Längsausdehnung auch winklig, gebogen oder andersartig ausgebildet sein, je nachdem wie die Nuten in den beiden zu verbindenden Werkstücken dimensioniert bzw. ausgebildet sind, wie in den Figuren 7a - c schematisch dargestellt.

In den Figs. 8a bis 8f sind weitere Ausführungsvarianten von lamellenartigen, bzw. plättchenartige Verbindungselemente dargestellt. Es handelt sich dabei selbstverständlich nur um eine Auswahl, und die erfindungsgemässen Verbindungslamellen können auch andere oder kombinierte Formen aufweisen.

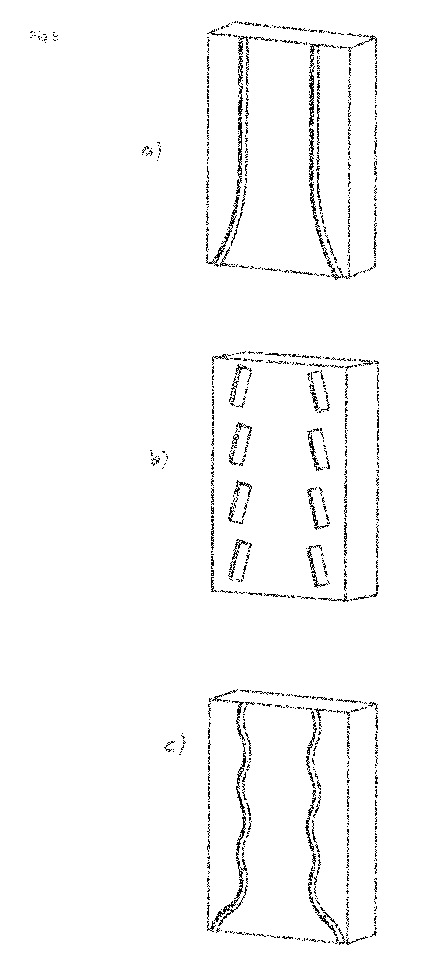

Schliesslich müssen die rippenartigen Erhebungen nicht durchgehend ausgebildet sein, sondern sie können auch unterbrochen ausgebildet sein, gewölbt, wie bereits oben erwähnt gezackt, usw. Diesbezüglich sei auf die Figuren 9a - 9c verwiesen, wo mögliche Beispiele von rippenartigen Erhebungen dargestellt sind.

Bei den unter Bezug auf die Figuren 1 bis 9 dargestellten Beispielen von plättchen- bzw. lamellenartigen Verbindungselementen, rippenartigen Erhebungen, etc. handelt es sich selbstverständlich nur um Beispiele um die vorliegende Erfindung besser zu erläutern. Variationen, Modifikationen der Verbindungselemente wie auch der rippenartigen Erhebungen sind möglich, wesentlich dabei ist, dass mindestens auf einer Seitenfläche mindestens zwei rippenartige Erhebungen ausgebildet sind, welche mindestens entlang eines Abschnittes schräg und/oder gebogen voneinander laufend ausgebildet sind.

Das Eintreiben bzw. Einschlagen der lamellenartigen Verbindungselemente kann auf einfachste Art und Weise beispielsweise mittels eines Hammers oder eines anderen Eintreibwerkzeuges erfolgen. Das Verbinden zweier Werkstücke kann aber auch maschinell erfolgen, indem derartige Verbindungselemente maschinell in jeweilige Nuten von zu verbindenden Werkstücken eingetrieben werden.

Im Gegensatz zu herkömmlichen Verbindungselementen, wie z.B. Schwalbenschwanz-Verbinde, die eine aufwendige formschlüssige Ausfräsung in den zu verbindenden Werkstücken erfordern, reicht es bei diesem System eine normale Nut auszubilden. Oder im Gegensatz zu Wellennägel, welche ein komplexes Einschiessgerät bedingen, reicht bei diesem System ein einfacher Hammer aus.

Mit anderen Worten wird die eingangs erwähnte Aufgabe durch das erfindungsgemäss vorgeschlagene Verbindungselement auf einfachste und effizienteste Art und Weise gelöst.

## Patentansprüche

1. Verbindungselement zum Verbinden zweier Werkstücke (1, 3), **gekennzeichnet durch** ein lamellenartiges Element (21, 31, 41, 51, 61) mit in mindestens einer Seitenfläche mindestens zwei rippenartigen Erhebungen (23, 25, 33, 43, 45, 55, 65), welche mindestens entlang eines Abschnittes schräg und/oder gebogen voneinander laufend ausgebildet sind.

2. Verbindungselement nach Anspruch 1 zum Verbinden von zwei Werkstücken (1, 3), je aufweisend endständig eine Nut (11, 13), wobei die beiden Nuten zueinander zum Verbinden ausgerichtet sind, **dadurch gekennzeichnet, dass** das lamellenartige Element (21, 31, 41, 51, 61) vorgesehen ist, um zum Verbinden in die Nuten eingetrieben bzw. eingeschlagen zu werden, und dass die mindestens zwei Rippen weitgehendst in Eintreibrichtung verlaufend ausgebildet sind.

3. Verbindungselement nach einem der Ansprüche 1 oder 2, **dadurch gekennzeichnet, dass** die vorstehenden, rippenartigen Erhebungen (23, 25, 33, 43, 45, 55, 65) auf beiden Seitenflächen des Elementes ausgebildet sind, und von der Verbindung bzw. Kontaktfläche der beiden Werkstücke gesehen in Eintreibrichtung wenigstens entlang eines Abschnittes auseinander verlaufend ausgebildet sind.

4. Verbindungselement nach einem der Ansprüche 1 bis 3, **dadurch gekennzeichnet, dass** die rippenartigen Erhebungen in Eintreibrichtung gesehen im endständigen Bereich bzw. im Bereich der unteren Kante des lamellenartigen Elementes schräg, d.h. gewinkelt oder gebogen auseinanderlaufend ausgebildet sind.

5. Verbindungselement nach einem der Ansprüche 1 bis 4, **dadurch gekennzeichnet, dass** die Erhebungen mindestens teilweise in Längsausdehnung gesehen unregelmässig, gewellt, unterbrochen, etc. ausgebildet sind.

6. Verbindungselement nach einem der Ansprüche 1 bis 5, **dadurch gekennzeichnet, dass** die rippenartigen Erhebungen unterschiedlich stark und unterschiedlich ausgebildet vom Verbindungselement vorstehend ausgebildet sind, wie eine gezackte, gewölbte, etc. vorstehende Kante aufweisend.

7. Verbindungselement nach einem der Ansprüche 1 bis 6, **dadurch gekennzeichnet, dass** die rippenartigen Erhebungen gezackt ausgebildet sind mit Zacken in Eintreibrichtung rückwärts gerichtet, um ein Ausbrechen oder Austreten des Elementes aus der Nut zu verhindern.

8. Verbindungselement nach einem der Ansprüche 1 bis 7, **dadurch gekennzeichnet, dass** in der oder den Seitenflächen mindestens ein weiteres hakenartiges Element angeordnet ist zum ein Ausbrechen oder Austreten des Elementes aus der Nut zu verhindern.

9. Verbindungselement nach einem der Ansprüche 1 bis 8, **dadurch gekennzeichnet, dass** das Element in Längsausdehnung bzw. in Draufsicht gesehen geradlinig, winklig, bogenartiggerundet oder dgl. oder eine kombinierte Form aufweisend ausgebildet ist.

10. Verbindungselement nach einem der Ansprüche 1 bis 9, **dadurch gekennzeichnet, dass** das lamellenartige Element rechtwinklig, quadratisch, kreisscheibenartig, elliptisch etc. ausgebildet ist mit einer in Eintreibrichtung gesehen unteren Kante, welche oval oder elliptisch zusammenlaufend, geradlinig, keilförmig, winklig, kreisförmig oder dgl. ausgebildet ist.

11. Verbindungselement nach einem der Ansprüche 1 bis 10, **dadurch gekennzeichnet, dass** die Höhe der rippenartigen Erhebungen in Eintreibrichtung gesehen wenigstens nahezu konisch bzw. keilförmig zusammenlaufend ausgebildet ist, derart, dass die Höhe der rippenartigen Erhebungen im Bereich der Unterkante des lamellenartigen Elementes kleiner ist als die Höhe im oberen Bereich.

12. Verbindungselement nach einem der Ansprüche 1 bis 11, **dadurch gekennzeichnet, dass** das lamellenartige Element aus einem metallenen Werkstoff, aus einem Polymer bzw. Kunststoff, aus einem Holzwerkstoff, aus einem Holz-Composit besteht und/oder aus einer Kombination dieser Materialien.

13. Verfahren zum Verbinden zweier Werkstücke mittels eines Verbindungselementes nach einem der Ansprüche 1 bis 12, **dadurch gekennzeichnet, dass** zunächst in den zu verbindenden Werkstücken je endständig in Richtung zur Verbindung bzw. Kontaktfläche eine Nut ausgefräst wird, wobei die beiden Nuten aufeinander ausgerichtet ausgebildet werden, und entsprechend der Verbindungselemente dimensioniert werden, derart, dass das Verbindungselement unter Kraftaufwand in die Nuten eingetrieben werden muss.

14. Verfahren nach Anspruch 13, **dadurch gekennzeichnet, dass** nach erfolgtem Herstellen der Nuten das Verbindungselement mittels eines Werkzeuges, wie eines Hammers oder dgl. oder maschinell mittels einer entsprechenden Maschine, in die Nuten eingetrieben bzw. eingeschlagen oder eingepresst wird, und dass beim Eintreibvorgang die beiden zu verbindenden Werkstücke bzw. deren Kontaktflächen quer zur Eintreibrichtung zusammengepresst werden.
